# EUROPEAN PATENT APPLICATION

(11) **EP 2 012 109 A1**
(43) Date of publication of application: **07.01.2009**
(21) Application number: 07747837.8
(22) Date of filing: 05.03.2007
(51) Int. Cl.: G01N 21/00

(54) **METHOD FOR OBTAINING A HIGH RESOLUTION IMAGE**

(30) Priority: 07.04.2006 RU 2006112437
(71) Applicant: Mikliaev, Juriy Vladimirovich, Chelyabinsk 454025 (RU); Asselborn, Sergei Aleksandrovich, Chelyabinsk 454091 (RU)
(72) Inventor: Mikliaev, Juriy Vladimirovich, Chelyabinsk 454025 (RU); Asselborn, Sergei Aleksandrovich, Chelyabinsk 454091 (RU)
(74) Representative: Basfeld, Rainer
(86) International application number: PCT/RU2007/000104
(87) International publication number: WO 2007/117179

(57) **Abstract**

The invention relates to microscopy, in particular to a method for obtaining a high resolution image and can be used for observing biological objects, micro and nano-structures and for the micro-lithography quality inspection. The aim of said invention is to increase the rate of the image producing process, to reduce the cost thereof and to simplify said process. The inventive method for obtaining a high resolution image consists in carrying out the object examination by means of an optical far field microscope and in processing data. Particles are applied to the object under examination and said object is placed in a particle suspension-containing liquid, wherein a particle redistribution along the surface of the object under examination is carried out. The capturing or scattering or luminescent particles are used. The aim is also attained by the use of a light reflected from the object surface or by means of a light passing therethrough. For the particle redistribution, the Brownian motion or liquid directed flows, or magnetic or electric fields are used.

## Description

The invention relates to microscopy, and more specifically, to a method for obtaining a high resolution image, and it can be used for examination of biological objects, microstructures or nanostructures and also for microlithography quality inspection.

A conventional resolution limit for an ideal optical system is known to be dependent on the diffraction spot size, expressed as R = λ/(2*NA), wherein R is the spot size, λ is the wavelength of light that is used, and NA is the numerical aperture of the lens (objective). The numerical aperture (NA) depends on the solid angle within which light that is captured by the lens propagates. The aperture equals the sine of the maximum angle defined by the light emerging from the object that is still incident upon the lens. This limit is determined by the wave nature of light and is regarded as an insurmountable hurdle for many practical applications. At the same time, this resolution limit is definite subject to certain assumptions such as monochromaticity of the source, non-polarized light, short imaging time, and the like. When the abovementioned limitations are removed, additional degrees of freedom, which will allow the limit to be exceeded, can be provided in many instances. If this is done, a greater amount of data on the specimen acquired by the viewing system may result in the 3-D resolution being improved by using other degrees of freedom.

A prior art method improves a single coordinate resolution (depth-wise in the sample) (cf. W. Lukosz, "Optical systems with resolving powers exceeding the classical limits." J. Opt. Soc. Am. 56, 1463-1472 (1967)).

There are also prior art methods in which orthogonal light polarization is used to double resolution when a polarization-symmetrical specimen is examined (cf. A. W. Lohmann and D. P. Paris, "Superresolution for nonbirefringent objects," Appl. Opt. 3, 1037-1043 (1964)).

A prior art method for mathematical image processing uses extrapolation of the 3-D spectrum (cf. A. J. den Dekker, A. van den Bos, "Resolution: a survey," J. Opt. Soc. Am. A 14,547-557(1997)).

Another opportunity to obtain more information on the specimen is to use several wavelengths for object examination. In that case, the object should not have a color, i.e., it should not have a different appearance for different wavelengths (cf. A. M. Tai, "Two-dimensional image transmission through a single optical fiber by wavelength-time multiplexing," Appl. Opt. 22, 3826-3832 (1983)).

Methods that are based on oblique specimen lighting are most popular for systems having a significant 3-D resolution (cf. Z. Zalevsky and D. Mendlovic, "Optical Super resolution," Springer, New York, (2004)).

The prior art methods are deficient because they can be used only for certain types of specimens being examined, and, in addition, the resolution is enhanced only a little (no multifold increase).

One of the most preferred degrees of freedom that could be used is an interim degree of freedom, i.e., resolution enhancement can be ensured when a static object is examined under changing conditions, which are factored in, and by using integrated processing of the images that have been obtained under such conditions. In a prior art method, a specimen under examination is illuminated with a speckle pattern of a known configuration, which changes with time, thus allowing a higher resolution image to be obtained by using digital processing of the accumulated data (cf. J. Garcia, Z. Zalevsky, and D. Fixler, "Synthetic aperture superresolution by speckle pattern projection," Optics Express Vol. 13, No. 16, 6073-6078 (2005)). This method is deficient because highly-accurate information on distribution of intensity of the speckle pattern that is used has to be obtained in advance.

Prior art teaches a method for obtaining a high resolution image (cf. U.S. Patent 6,900,435 B1 dated 05.31.2005), which is referred to here as the closest prior art.

The closest prior art method teaches the use of a combination of a near-field microscope and a conventional optical microscope (a far-field optical microscope). This method increases significantly the imaging system speed in obtaining high resolution images by scanning only the surface areas of interest.

The information on minor details of the specimen is obtained in the closest prior art method by scanning the specimen surface with a probe. A near-field optical scanning microscope is the closest prior art for the method for providing a high resolution that is disclosed herein. The microscope is built around a probe, which is normally an optical fiber having its end face covered with a blind. Light propagates within the fiber core and is contained within an area (cylinder) of a radius that is larger than the wavelength. A metal film is applied to the fiber core and has an aperture aligned with the core center. The aperture diameter is much smaller than the wavelength and, accordingly, smaller than the diffraction resolution limit of a conventional optical microscope.

Radiation is inputted at the open end of the fiber. The light escapes from the opposite end through the small orifice (blind). This is how a "point-like" light source is obtained. If the fiber end is brought close to the specimen being examined, the light will be reflected from the specimen, travel back into the fiber and escape at the opposite end. The intensity of the light that has escaped from the opposite end can be measured to estimate the reflectance, color, and other optical properties of the specimen surface point located in front of the probe. By moving the probe (the fiber end) over the entire surface of the specimen and recording the intensity of light reflected from the surface for a given coordinate, an image of the entire specimen can be plotted. The resolution that is achieved when this process is used is limited by the blind size (the size of the orifice through which the light escapes from the fiber) and by the distance from the probe to the specimen. The distance is normally about 50 nm. The probe position is normally controlled by piezo positioners, and the positioning accuracy provided by these devices may be as good as hundredths of one nanometer.

It should be noted that it is hard in practice, and even unreasonable, to bring the fiber end close to the specimen surface. The fiber end and the blind will be inevitably damaged in the process. As a matter of fact, this is not necessary. For all intents and purposes, the fiber end may be within a so-called near-field area. This is the area in which small-scale variations of reflected light intensity (that are smaller than the diffraction limit) still remain.

The combination of the two types of microscopes (a near-field microscope and a far-field microscope) that is used in the closest prior art method creates a "point-like" light source that illuminates a "point" on the specimen surface by means of the near-field microscope probe, and the far-field (conventional) microscope is used for examining the light diffused by the point.

The prior art method provides an option of shading a point on the surface instead of illumination, with a conventional microscope being used for examination of a change in the reflected light pattern.

The closest prior art has a number of disadvantages, which are inherent in the near-field optical microscope, more specifically, a high cost because of the use of an expensive precision probe positioning system, and the imaging speed that is still too low.

It is an object of the present invention to eliminate the abovementioned disadvantages, more specifically, to increase the imaging speed and also to make the process itself less expensive and simpler.

The above object is accomplished by the fact that, in a method for obtaining a high resolution image, comprising examining an object under study under a far-field optical microscope and processing the examination data, according to the invention, particles are deposited on the object being studied, or the object is placed into a liquid containing a thinned suspension of particles, the particles being redistributed over the surface of the object under study. The particles are microparticles or nanoparticles.

According to the invention, absorbing, scattering or fluorescent particles are used.

The above object is also accomplished by using light that is reflected by the object surface or light that is transmitted through the object. Redistribution of the particles is achieved by using the Brownian movement or directional liquid flows, or a magnetic field, or an electric field.

It can be seen from the above that, compared to the closest prior art, the method uses particles that move or that are caused to move over the surface of the object being studied, instead of a probe. The specimen surface with the particles can now be examined by using a conventional light microscope. The particles may be suspended, e.g., in a thin liquid layer, which for this purpose is applied to the surface of the object being studied or which fills the space between the lens and the specimen in the manner of when immersion fluid is used. When particles that are located in the immediate proximity to the specimen surface (within the near-field area) are used, information on the distribution of the near-field intensity over the surface can be obtained by viewing of the particles by means of a conventional optical microscope.

They may function either as the "point-like" light sources when the fluorescent particles are used or as a shading "probe" when the light-absorbing particles are used. The method according to the invention provides an opportunity to avoid using a positioning system because the coordinate of a point-like source or scatterer or absorbing center can be determined by means of a conventional optical microscope with a much smaller detail than the resolution of a given microscope.

The particle coordinate can be thus determined accurately, and the line-by-line scanning or any other type of scanning can be replaced with a random or any other movement of the particles.

The entire surface can be thus "scanned" by the above-described "probes" (particles), and, because a large enough quantity of particles can be examined simultaneously, the speed of such "scanning" is significantly higher than the speed achieved when a near-field microscope is used, which has been confirmed in experiments.

There is an abundant choice of all types of particles (absorbing, scattering, fluorescent, measuring from 10 nanometers to dozens of micrometers) and their manufacturers on the market now. The cost of such microparticles and nanoparticles is relatively low: up to 100 dollars for 10 ml of nanoparticle suspension.

It should be noted that in order to enable accurate determination of a particle coordinate using the microparticle image in the optical microscope, the blurred image of the microparticle should not be overlapped by a similar image of another particle. For that reason, the particle suspension that is used should be thinned enough to facilitate the analysis of the resulting images.

The method for obtaining a high resolution image according to the invention has distinctions from the closest prior art (cf. U.S. Patent 6,900,435 B1 dated 05.31.2005), hence, it meets the novelty requirements; it is not obvious from the reviewed state of the art, hence, it has the inventive step.

The method for obtaining a high resolution image can be carried out and used commercially, therefore, it meets the industrial applicability requirement.

The gist of the proposed technical solution will now be described in detail with reference to the accompanying drawings, in which:
Fig. 1 is a schematic illustration of the image analysis in transmitted light;
Fig. 2 is a schematic illustration of the image analysis in reflected light;
Fig. 3 is a schematic illustration of the image analysis using an immersion lens;
Figs. 6 and 9 show a test object image that was obtained in an experiment with the use of a conventional (not near-field) optical microscope;

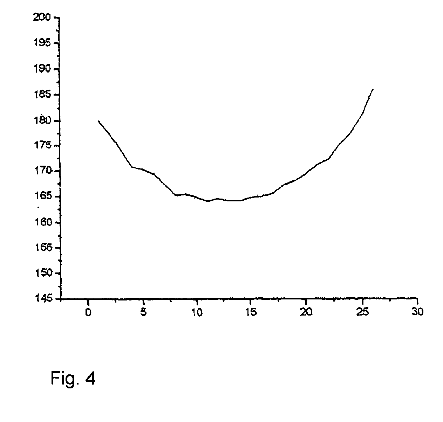

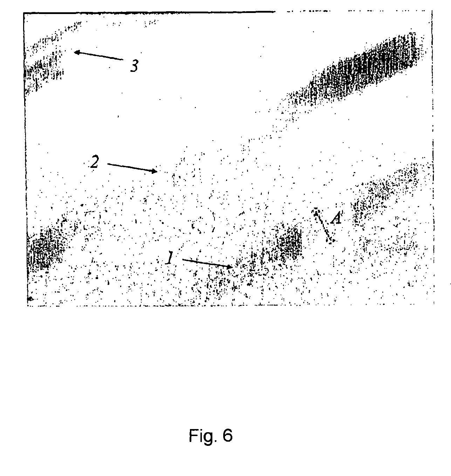

Fig. 4 shows an intensity profile along a segment A shown in Fig. 6 which is visible in a conventional (not near-field) optical microscope, as obtained in an experiment;

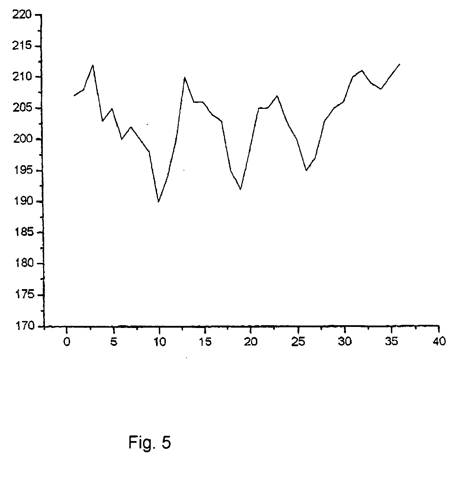

Fig. 5 is a chart showing the radiance of a point corresponding to the center (light spot) of a microparticle versus particle coordinate along a segment A shown in Fig. 6, as obtained in an experiment;

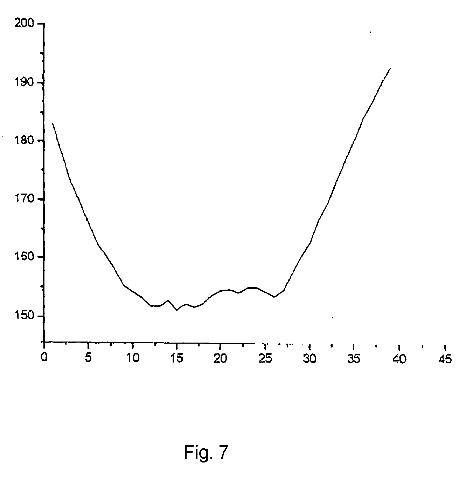

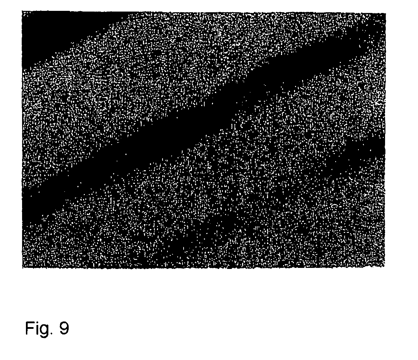

Fig. 7 shows an intensity profile along a segment B shown in Fig. 9, which is visible in a conventional (not near-field) optical microscope, as obtained in an experiment;

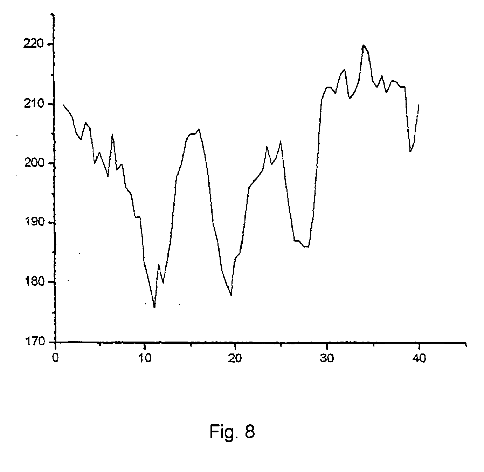

Fig. 8 is a chart showing the radiance of a point corresponding to the center (light spot) of a microparticle versus particle coordinate along a segment B shown in Fig. 9, as obtained in an experiment.

A method for obtaining a high resolution image comprises examining an object under study under a conventional (not near-field) optical microscope. Particles are deposited on the object being studied, or the object is placed into a liquid containing a thinned suspension of particles, the particles being redistributed over the surface of the object under study. The particles that are used are microparticles or nanoparticles. The method can use absorbing, scattering or fluorescent particles. Light may be scattered (reflected) by the object surface, or it can be transmitted through the object. The Brownian movement or directional liquid flows are used for particle redistribution. The specimen may be shaken to redistribute the particles. When magnetic particles are used, a magnetic field is used to redistribute the particles. An electric field may also be used.

### Specific Embodiments

### Example 1

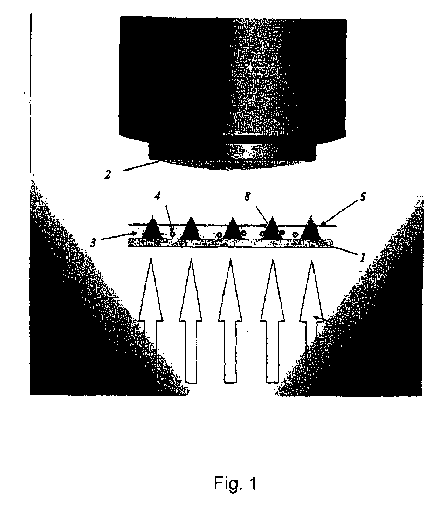

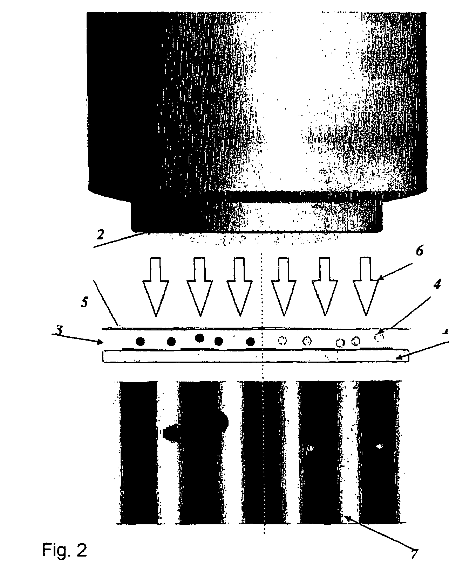

A potential sequence of steps in the imaging process may be as follows (see Figs. 1 and 2).

A specimen 1 is placed under a microscope lens 2. A droplet of clear liquid 3, which contains a suspension of nano- or microparticles 4, is deposited on the specimen 1. The liquid may be water.

In order to make the surface of the liquid 3 flat, a cover glass 5 is placed on the droplet as close as possible to the surface of the specimen. In order to prevent the specimen from being damaged by the cover glass 5 and to prevent all liquid from being displaced from the specimen surface, a ring of a thin film or other containment members are placed around the specimen on the glass or around the specimen area of interest, which do not allow the cover glass to move closer to the specimen (not shown in Figs. 1 and 2). The flat surface of the liquid 3 in combination with the cover glass 5 prevent potential distortions when the specimen 1 surface is viewed under the microscope. It should be noted that the fraction of "useful" particles that are in close proximity to the specimen surface (in the near-field area) depends directly on the thickness of the liquid layer that is located between the specimen 1 and the cover glass 5. Particles can move in the liquid in a random (Brownian) movement or because of a movement of the liquid itself, or vibrations may be induced in the specimen. The microscope lens 2 is then extended closer to the specimen to be positioned at a distance that provides a sharp image of the specimen surface.

The specimen may be examined either in a transmitted light 6 (Fig. 1) if the specimen is capable of transmitting light or in a reflected (scattered) light 6 (Fig. 2).

A digital camera (not shown in Figs. 1 and 2) is used to record the image, which is stored in a computer. The images are recorded repeatedly at certain time intervals during which the particles that are present in the liquid have time to move. As a result, the computer memory accumulates a set of specimen images corresponding to different particle distribution patterns over the specimen surface, which have been obtained through the liquid containing particles. Fig. 2 shows schematically an image 7 of the specimen 1 (an amplitude array) visible through the optical microscope for different types of particles used (for absorbing particles on the left and for scattering particles on the right). An absorbing particle is not visible if it is located over an absorbing element of the specimen (in the near-field area of the specimen absorbing element) and it is visible if it is located over a scattering element of the specimen. The system works in the same manner for scattering particles.

The resulting image array is processed by the computer. For each individual image, the light that was scattered, absorbed or emitted by the movable particles is identified (in the form of the intensity profiles defined by or corresponding to the particles). The value of scatter (or absorption) corresponding to each individual particle and the coordinate of the particle are determined by the processing.

A point with the coordinate of each particle is assigned the value of the scattered (absorbed) intensity in the enhanced resolution image obtained. The resulting values for all the particles and for the entire set of the registered images are summed up, and a background component and a component that varies slowly in space are subtracted from the resulting image. As a result, an enhanced resolution image is obtained, which has resolution of details that are much smaller than the resolution of the lens that is used in the microscope.

The above-described procedure is not a strict procedure, more specifically, regarding the mathematical processing of the stored images.

Fig. 1 illustrates schematically a concept of high resolution imaging when the specimen 1 is illuminated with the transmitted light. For example, the specimen is a periodic amplitude array, and absorbing particles are used in a clear liquid. The particles will not be visible in the specimen image obtained in this manner if they are located over an absorbing element of the specimen (in the area of a shade 8 that is cast by the specimen).

Figs. 6 and 9 are examples of experimentally obtained images of a specimen when the system of Fig. 1 was used. The specimen was an amplitude mask having three sets of alternating strips. Each set had three strips spaced at a distance of 1.5 µm for Set 1, 2.1 µm for Set 2, and 3 µm for Set 3. It can be seen from an intensity profile (see Figs. 4 and 7) along segments A and B shown in Figs. 6 and 9 that the microscope lens that was used in the experiment could not ensure the necessary resolution for obtaining a crisp image of Sets 1 and 2. At the same time, it can be seen in Figs. 5 and 8 that the use of 1.5-µm diameter absorbing microparticles in water provided a significantly higher resolution of the resulting image.

### Example 2

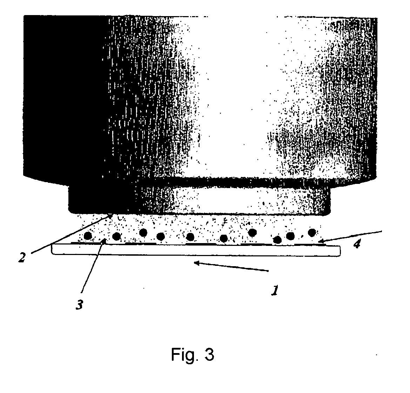

An immersion lens 2 (Fig. 3) may be used instead of the cover glass 5 that was placed on the specimen 1 with the droplet containing a suspension of the particles 3. The immersion liquid located between the lens and the specimen is a liquid containing a suspension of particles.

### Example 3

The particles are deposited directly on the specimen without using any liquid, and the particles are redistributed over the specimen surface by shaking, by inducing ultrasonic waves in the specimen, or under the effect of a magnetic field (for magnetic particles).

Therefore, compared to the closest prior art, the method for obtaining a high resolution image according to the invention ensures a higher imaging speed and also simplifies the process and makes it less expensive.

## Claims

1. A method for obtaining a high resolution image, comprising examining an object under study under a far-field optical microscope and processing the data, **characterized in that** particles are deposited on the object being studied, or the object is placed into a liquid containing a suspension of particles, the particles being redistributed over the surface of the object under study.

2. The method as claimed in claim 1, **characterized in that** microparticles or nanoparticles are used.

3. The method as claimed in claim 1, **characterized in that** absorbing particles are used.

4. The method as claimed in claim 1, **characterized in that** scattering particles are used.

5. The method as claimed in claim 1, **characterized in that** fluorescent particles are used.

6. The method as claimed in claim 1, **characterized in that** light that is scattered (reflected) by the object surface is used.

7. The method as claimed in claim 1, **characterized in that** light that is transmitted through the object is used.

8. The method as claimed in claim 1, **characterized in that** the Brownian movement is used for particle redistribution.

9. The method as claimed in claim 1, **characterized in that** directional liquid flows are used for particle redistribution.

10. The method as claimed in claim 1, **characterized in that** the specimen is shaken to redistribute the particles.

11. The method as claimed in claim 1, **characterized in that** magnetic particles are used.

12. The method as claimed in claim 1, **characterized in that** a magnetic field is used to redistribute the particles.
